# EUROPÄISCHE PATENTSCHRIFT

(11) **EP 2 272 577 B1**
(45) Veröffentlichungstag und Bekanntmachung des Hinweises auf die Patenterteilung: **11.02.2015**
(21) Anmeldenummer: 10006895.6
(22) Anmeldetag: 03.07.2010
(51) Int. Cl.: A63J 1/02, G01M 17/007, G09B 9/02, G09B 9/042, B60W 30/08

(54) **Vorrichtung und Verfahren zum Überprüfen einer Funktion eines Fahrzeugs**
Device and method for inspecting a function of a vehicle
Dispositif et procédé de vérification d'une fonction d'un véhicule

(30) Priorität: 10.07.2009 DE 102009032525
(43) Veröffentlichungstag der Anmeldung: 12.01.2011
(73) Patentinhaber: Audi AG, 85045 Ingolstadt (DE); Audi Electronics Venture GmbH, 85080 Gaimersheim (DE)
(72) Erfinder: Mesow, Lars, Dr., 85120 Hepberg (DE)
(74) Vertreter: Thielmann, Frank

(56) Entgegenhaltungen:
- EP-A1- 0 338 171
- EP-A1- 1 734 352
- DE-A1-102005 027 774
- DE-A1-102007 035 474
- JP-A- 2008 039 686

## Beschreibung

Die Erfindung betrifft ein Verfahren zum Überprüfen einer Funktion eines Fahrzeugs gemäß dem Oberbegriff von Patentanspruch 1. Die Erfindung betrifft auch eine Vorrichtung zum Überprüfen einer Funktion eines Fahrzeugs gemäß dem Oberbegriff des Patentanspruchs 4. Unter dem Begriff Funktion wird hier insbesondere die Reaktion wenigstens einer Komponente des Fahrzeugs auf ein außerhalb des Fahrzeugs stattfindendes Ereignis verstanden. Eine Komponente ist dabei bevorzugt ein Fahrerassistenzsystem oder ein Sicherheitssystem oder eine Einrichtung des Fahrzeugs, die durch eines dieser Systeme angesteuert wird.

Fahrerassistenzsysteme von Fahrzeugen unterstützen einen Fahrer beim Durchführen schwieriger Fahrmanöver. Im Falle einer Einparkhilfe wird z.B. ein Abstand des Fahrzeugs zu Objekten ermittelt, zu denen der Fahrer keinen direkten Sichtkontakt hat. Dadurch kann das Fahrzeug z.B. in geringem Abstand sicher an diesen Objekten vorbeimanövriert werden. Ein anderes Beispiel für ein Fahrerassistenzsystem ist eine automatische Abstandsregelung für einen Kraftwagen. Zum Ermitteln des Abstands zwischen dem Fahrzeug und anderen Objekten wird durch ein Fahrerassistenzsystem die Umgebung des Fahrzeugs mittels Sensoren überwacht. Ein Steuergerät ermittelt dann anhand von Daten, die das Steuergerät von den Sensoren empfängt, den Abstand des Fahrzeugs zu den anderen Objekten in der Umgebung. Als Sensoren kommen zum Beispiel Ultraschall-, Infrarot- oder Radarsensoren oder auch Kameras zum Einsatz. Wird ein bestimmter Abstand zwischen dem Fahrzeug und einem anderen Objekt unterschritten, kann durch das Steuergerät ein Warnsignal in der Fahrgastzelle erzeugt werden. Anstelle oder zusätzlich kann durch das Steuergerät eine andere Komponente des Fahrzeugs, z.B. das Bremssystem, angesteuert werden. So kann eine Bremsung des Fahrzeugs eingeleitet werden und eine Kollision verhindert werden.

Ein Sicherheitssystem für ein Fahrzeug schützt einen Fahrer in Situationen, in denen das Fahrzeug oder die Gesundheit des Fahrers in Gefahr sind. Das Sicherheitssystem kann dazu ähnlich wie ein Fahrerassistenzsystem die Umgebung des Fahrzeugs mithilfe von Sensoren überwachen und über ein Steuergerät andere, den Fahrer schützende Komponenten des Fahrzeugs aktivieren, wenn das Fahrzeug mit einem anderen Objekt kollidiert oder eine Kollision unmittelbar bevorsteht. Eine sicherheitsrelevante Komponente kann z.B. ein Airbag, ein Bremssystem oder ein Gurtstraffer sein.

Bei Fahrerassistenzsystemen und bei Sicherheitssystemen muss die Überwachungseinheit bestehend aus den Sensoren und dem Steuergerät ausgiebig getestet werden können, um z.B. ermitteln zu können, wie zuverlässig bestimmte Objekte von der Überwachungseinheit erkannt werden. Auch die von einem Steuergerät angesteuerten anderen Komponenten müssen unter verschiedenen Testbedingungen geprüft werden können. Für ein solches Testen einer durch die Überwachungseinheit oder einer anderen Komponente bereitgestellten Funktion sind reproduzierbare Testbedingungen entscheidend, damit z.B. beim Entwickeln solcher Komponenten eine systematische Verbesserung möglich ist oder Komponenten z.B. für einen Abnahmetest miteinander verglichen werden können.

Ein wichtiger Test bezieht sich dabei auf die Frage, wie robust ein Fahrerassistenzsystem oder ein Sicherheitssystem eines Fahrzeugs gegen ein fehlerhaftes oder unnötiges Auslösen einer Funktion ist. Ist eine Kollision eines bestimmten Objekts mit dem Fahrzeug unkritisch für das Fahrzeug oder den Fahrer, so sollte das zu testende System nicht z.B. mit einer Bremsung des Fahrzeugs oder einer Zündung eines Airbags reagieren. Ein unkritisches Objekt kann z.B. ein Ball sein, der auf die Fahrbahn rollt, oder ein Pappkarton, der vom Wind auf die Fahrbahn geweht wird. Solche Objekte können von dem Fahrzeug gefahrlos überfahren werden. Auch eine Spritzwasserfontäne, die von einem vorbeifahrenden Fahrzeug aufgeworfen wird, oder von einem Baum fallende Blätter dürfen keine Falschauslösung verursachen. Zum Testen der Robustheit eines Systems werden daher entsprechende Situationen nachgestellt, indem eine Person auf einem Versuchsfeld z.B. Bälle gegen das zu überprüfende Fahrzeug schießt oder Kartons vor das fahrende Fahrzeug schleudert. Genauso werden auch harte und schwere Objekte, wie z. B. Äste vor das Fahrzeug geworfen, um festzustellen, ob das System korrekt zwischen gefährlichen und ungefährlichen Objekten unterscheidet.

Aus der DE 10 2007 031 040 A1 sind eine Prüfvorrichtung und ein Prüfverfahren für ein Fahrerassistenzsystem eines Fahrzeugs bekannt, bei denen eine Sendeeinrichtung außerhalb des Fahrzeugs Signale an Sensoren des Fahrerassistenzsystems abstrahlt, um dadurch eine Wechselwirkung zwischen einem Objekt aus einer Umgebung des Fahrzeugs und den Sensoren zu simulieren. Nachteilig bei dieser Art der Überprüfung ist, dass die abzustrahlenden Signale bekannt sein müssen. So können nur Situationen getestet werden, zu denen die Wechselwirkung der Sensoren mit dem Objekt bereits so weit bekannt ist, dass die entsprechenden Signale erzeugt werden können. Insbesondere kann nicht überprüft werden, ob ein Sensor ein bestimmtes Objekt überhaupt erkennt.

Aus der DE 10 2007 035 474 A1 ist ein System und Verfahren zur Funktionsprüfung eines Fahrerassistenzsystems bekannt. Die Oberbegriffe der unabhängigen Ansprüche wurden ausgehend von dieser Druckschrift formuliert. Diese Druckschrift beschreibt ein System und ein Verfahren zur Funktionsprüfung eines Fahrerassistenzsystems mit einem auf einer mit zumindest einem Verkehrsweg ausgebildeten Prüfstrecke frei bewegbaren Fahrzeug, welchem zumindest ein zu prüfendes Fahrerassistenzsystem zugeordnet ist, das zur Detektion von Informationen über die Fahrzeugumgebung und/oder zur Verarbeitung von einem anderen System empfangene Informationen über die Fahrzeugumgebung ausgebildet ist, und welches abhängig von den Informationen zur Warnung eines Fahrzeuginsassen und/oder zum automatischen Eingriff in das Fahrverhalten des Fahrzeugs ausgebildet ist, und zumindest einem Dummyelement, welches zur Simulation einer realen Verkehrssituation auf der Prüfstrecke bewegbar ist, wobei sich zur Funktionsprüfung des Fahrerassistenzsystems das Dummyelement zumindest zeitweise in dem von dem Fahrerassistenzsystem erfassten Umgebungsbereich befindet. Dieses System umfasst eine Schienenvorrichtung, an der das Dummyelement angeordnet ist. Dadurch kann einerseits eine mechanisch stabile Anbringung gewährleistet werden und darüber hinaus eine geführte Bewegung des Dummyelements in reversibler, reproduzierbarer Weise ermöglicht werden. Das Dummyelement kann bei der Simulation einer Verkehrssituation in einer vorgespannten Lage an der Schienenvorrichtung angeordnet sein. Dadurch kann zur Vermeidung einer Kollision das Dummyelement schnell und unverzüglich aus dem Gefahrenbereich herausbewegt werden.

Aus der EP 0 338 171 ist eine Vorrichtung bekannt, um Fahrschüler bei unvorhersehbaren Hindernissen zu testen. Diese Vorrichtung umfasst eine Rampe oder eine Rutsche, die quer oder schräg zum Fahrzeug angeordnet sein kann. Über diese Rampe oder Rutsche können Objekte durch Schwerkraft vor das Fahrzeug bewegt werden.

Aus der gattungsbildenden DE 10 2005 027 774 A1 ist eine Fußgängerschutzprüfeinrichtung bekannt, bei der als Schlagkörper ausgebildete Körpermodelle mit vordefinierter Geschwindigkeit auf definierte Aufprallorte an einem Kraftfahrzeug geschossen werden können. Nach einer Beschleunigungsphase erfolgt ein Abkoppeln des Schlagkörpers, so dass dieser im freien Flug auf den Aufprallpunkt katapultiert wird. Das Fahrzeug wird während der Durchführung eines derartigen Tests nicht bewegt.

Des Weiteren ist bekannt, auf einem Versuchsfeld ein zu testendes Fahrzeug mit einem schweren Objekt von der Seite zu rammen, um den Schutz von Personen durch einen Seitenaufprallschutz zu überprüfen. Das Objekt wird zu diesem Zweck mit einem Wagen gegen das Objekt gerollt. Nachteilig bei dieser Art des Testens ist, dass die natürlichen Bewegungen vieler Objekte nicht nachempfunden werden, wenn diese Objekte mittels eines Wagens in Richtung auf das Fahrzeug zu bewegt werden.

Es ist Aufgabe der vorliegenden Erfindung, bei einem Fahrzeug mit einer Überwachungseinrichtung zum Erkennen einer möglichen Kollision das Entwickeln einer verbesserten Funktionalität des Fahrzeugs zu ermöglichen.

Die Aufgabe wird durch ein Verfahren gemäß Patentanspruch 1 sowie durch eine Vorrichtung gemäß Patentanspruch 4 gelöst. Vorteilhafte Weiterbildungen der Erfindung sind durch die Unteransprüche gegeben.

Durch das erfindungsgemäße Verfahren wird eine Funktion eines Fahrzeugs überprüft. Das Fahrzeug weist dabei eine Überwachungseinrichtung auf, mit der eine mögliche Kollision des Fahrzeugs mit mindestens einem Objekt in einer Umgebung des Fahrzeugs erkennbar ist. Die zu überprüfende Funktion umfasst ein Auslösen einer Änderung eines Zustands wenigstens einer Komponente des Fahrzeugs in Folge eines Erkennens einer möglichen Kollision durch die Überwachungseinrichtung. Eine Änderung eines Zustands kann dabei beispielsweise das Zünden eines Airbags, das Einleiten einer Bremsung oder ein automatisches Ausweichmanöver sein. Es kann sich aber auch um eine Zustandsänderung der Überwachungseinrichtung selber handeln.

Bei dem Verfahren wird das Fahrzeug in ein Versuchsfeld gebracht und außerhalb des Fahrzeugs mindestens ein Objekt auf dem Versuchsfeld in Bewegung gesetzt, so dass das Objekt in die von der Überwachungseinrichtung überwachte Umgebung des Fahrzeugs gelangt. Das mindestens eine Objekt wird dabei mit einer Beschleunigungseinrichtung beschleunigt und dann freigegeben, so dass das mindestens eine Objekt aufgrund seiner Trägheit eigenständig in die überwachte Umgebung gelangt. Dadurch ergibt sich der Vorteil, dass die Objekte eine natürliche Eigenbewegung ausführen, während sie in die von der Überwachungseinrichtung überwachten Umgebung des Fahrzeugs gelangen. Diese Eigenbewegung ist zudem beliebig reproduzierbar. Dadurch kann das Fahrzeug systematisch weiterentwickelt werden. Insbesondere kann auch eine bestimmte Bewegung von kleinen oder leichten Objekten systematisch herbeigeführt werden. Schließlich ergibt sich der Vorteil, dass eine Vielzahl unterschiedlicher Eigenbewegungen der Objekte mithilfe der Beschleunigungsvorrichtung hervorgerufen werden können.

Eine vorteilhafte Weiterbildung des erfindungsgemäßen Verfahrens ergibt sich, wenn eine Position und/oder eine Geschwindigkeit und/oder eine Beschleunigung des Fahrzeugs erfasst wird und das Objekt in Abhängigkeit von der erfassten Position und/oder der erfassten Geschwindigkeit und/oder der erfassten Beschleunigung beschleunigt wird, so dass es zu einem vorbestimmten zukünftigen Zeitpunkt mit einer vorbestimmten Geschwindigkeit und/oder Bewegungsrichtung in die von der Überwachungseinrichtung überwachte Umgebung gelangt. Durch Erfassen der Position und/oder der Bewegungsparameter des Fahrzeugs auf dem Versuchsfeld ergibt sich der Vorteil, dass das Objekt auch dann in der gewünschten Weise in die von der Überwachungseinrichtung überwachte Umgebung befördert wird, wenn ein Fahrer des Fahrzeugs im Verlauf mehrerer Tests das Fahrzeug nicht immer an exakt derselben Position und mit exakt denselben Bewegungsparametern in das Versuchsfeld fährt.

Bevorzugt beschleunigt die Beschleunigungseinrichtung das wenigstens eine Objekt durch Schleudern oder Schießen oder Abwerfen. Die Objekte führen dann in vorteilhafter Weise dieselben natürlichen Bewegungen aus, wie es z.B. auch ein auf eine Straße geschossener Ball oder ein auf eine Straße gewehter Karton tun würde. Dadurch lassen sich sehr realitätsnahe Situationen herbeiführen.

Gemäß einem ersten Aspekt der Erfindung ist die Überwachungseinrichtung des Fahrzeugs ausgelegt, das Objekt zu klassifizieren und die Zustandsänderung zusätzlich in Abhängigkeit von dem Ergebnis der Klassifizierung des Objekts auszulösen. Beispielsweise kann durch eine Überwachungseinrichtung festgestellt werden, ob es sich bei dem Objekt um ein in dem bereits beschriebenen Sinne unkritisches Objekt handelt, das ohne Risiko überfahren werden kann. Für ein Fahrzeug mit einer solchen Überwachungseinrichtung ergibt sich eine vorteilhafte Weiterbildung des erfindungsgemäßen Verfahrens, wenn ein Objekt in Bewegung gesetzt wird, für das durch die Überwachungseinrichtung ein Auslösen der Zustandsänderung nicht vorgesehen ist. Dadurch kann in vorteilhafter Weise überprüft werden, wie robust die Überwachungseinrichtung gegen ein fehlerhaftes oder unnötiges Auslösen einer Funktion ist.

Gemäß einem zweiten Aspekt kann durch die Überwachungseinrichtung eine Art der Kollision klassifizierbar sein und die Zustandsänderung zusätzlich in Abhängigkeit von dem Ergebnis der Klassifizierung der Art der Kollision auslösbar sein. Beispielsweise kann durch die Überwachungseinrichtung ermittelbar sein, unter welchem Winkel ein Objekt auf das Fahrzeug aufzutreffen droht und ob dadurch die Fahrsicherheit des Fahrzeugs gefährdet ist. Bei einer solchen Überwachungseinrichtung ergibt sich eine vorteilhafte Weiterbildung des erfindungsgemäßen Verfahrens, wenn das wenigstens eine Objekt derart beschleunigt wird, dass sich eine Art der Kollision ergibt, für die durch die Überwachungseinrichtung ein Auslösen der Zustandsänderung nicht vorgesehen ist. Dies ermöglicht in vorteilhafter Weise eine weitere Überprüfung der Überwachungseinrichtung daraufhin, ob sie zu Falschauslösungen neigt.

Zu der Erfindung gehören entsprechende Vorrichtungen zum Überprüfen einer Funktion eines Fahrzeugs. Die Vorrichtung umfasst eine Beschleunigungseinrichtung, mittels welcher nach einem Auslösen derselben das wenigstens eine Objekt beschleunigbar und dann freigebbar ist, so dass sich das wenigstens eine Objekt aufgrund seiner Trägheit eigenständig weiterbewegt.

Des Weiteren kann die Vorrichtung eine Steuereinrichtung umfassen, die dazu ausgelegt ist, ein Signal mit einer Information über eine Position und/oder eine Geschwindigkeit und/oder eine Beschleunigung des Fahrzeugs zu empfangen und in Abhängigkeit von der Information das Auslösen der Beschleunigungseinrichtung zu bewirken. Die Information über die Position und/oder die Bewegungsparameter des Fahrzeugs kann beispielsweise auf Daten beruhen, die von einem GPS-Empfänger (GPS - Global Positioning System) stammen. Die Vorrichtung weist den Vorteil auf, dass Objekte in reproduzierbarer Weise auf das Fahrzeug zu bewegt werden können, wobei die Objekte sich dabei in natürlicher Weise frei bewegen, also nicht beispielsweise durch einen Wagen geführt sind.

Bevorzugt weist die Vorrichtung auch eine Erfassungseinrichtung auf, die dazu ausgelegt ist, die Position und/oder die Geschwindigkeit und/oder die Beschleunigung des Fahrzeugs zu erfassen und das Signal mit der Information an die Steuereinrichtung zu übertragen. Die Erfassungseinrichtung umfasst bevorzugt eine Lichtschranke. Durch die Erfassungseinrichtung ergibt sich der Vorteil, dass die Vorrichtung selbst in der Lage ist, die Position und/oder die Bewegungsparameter des Fahrzeugs zu erfassen. Eine Lichtschranke stellt dabei eine besonders günstige Einrichtung dar, mit der die Position des Fahrzeugs und dessen Bewegungsparameter erfasst werden können. Bewegungsparameter eines Fahrzeugs lassen sich mit einer Lichtschranke dabei in an sich bekannter Weise beispielsweise mittels mehrerer Strahlen ermitteln, die das Fahrzeug beim Passieren der Lichtschranke nacheinander unterbricht.

Bei einer anderen vorteilhaften Weiterbildung der Vorrichtung weist die Beschleunigungseinrichtung eine Aufnahmevorrichtung zum Aufnehmen des wenigstens einen Objekts auf. Dadurch ergibt sich der Vorteil, dass mit der Beschleunigungseinrichtung beliebig geformte Objekte beschleunigbar sind. Es ist sogar möglich, Wasser, Blätter oder Sand mittels der Beschleunigungseinrichtung zu beschleunigen.

Die erfindungsgemäße Vorrichtung wird des Weiteren in vorteilhafter Weise weitergebildet, wenn die Beschleunigungseinrichtung eine Schiene aufweist, mittels welcher das wenigstens eine Objekt in seiner Bewegung führbar ist, während es beschleunigt wird. Dies erhöht in vorteilhafter Weise die Genauigkeit, mit der z.B. ein Abwurf oder ein Abschuss des Objekts reproduziert werden kann.

In einer weiteren Ausführungsform der erfindungsgemäßen Vorrichtung weist die Beschleunigungseinrichtung zum Beschleunigen des wenigstens einen Objekts wenigstens eine Feder und/oder wenigstens ein Seil aus einem Elastomer auf. Dies ermöglicht es in vorteilhafter Weise, eine preiswerte Beschleunigungseinrichtung für die Vorrichtung bereitzustellen.

In einer anderen vorteilhaften Weiterbildung der erfindungsgemäßen Vorrichtung weist die Beschleunigungseinrichtung zum Beschleunigen des wenigstens einen Objekts eine pyrotechnische oder pneumatische oder hydraulische Einrichtung oder einen Elektromotor auf. Diese Einrichtung kann anstelle von oder zusätzlich zu der wenigstens einen Feder bzw. dem wenigstens einen Elastomerseil verwendet werden. Dadurch ergibt sich der Vorteil, dass z.B. der Abschuss des Objekts sehr genau steuerbar ist. Als Elektromotor kann z.B. ein Linearmotor oder ein Elektromotor mit einem Rotor verwendet werden. Für den Fall, dass ein Elektromotor mit einem Rotor zum Beschleunigen des Objekts verwendet wird, kann eine Kraft zum Beschleunigen beispielsweise dadurch auf das Objekt übertragen werden, dass mit dem Elektromotor ein Zahnrad angetrieben wird, welches wiederum in eine Zahnstange eingreift. Durch Verwenden eines solchen Zahnstangenantriebs wird es ermöglicht, das von dem Rotor erzeugte Drehmoment in eine translatorische Kraft umzuwandeln. In Ähnlicher Weise ist eine Umsetzung des Drehmoments auch mit einem Zahnriemen möglich.

Bevorzugt ist bei der Beschleunigungseinrichtung ein Betrag der Beschleunigung des wenigstens einen Objekts einstellbar. Dadurch lassen sich in vorteilhafter Weise unterschiedlich schwere Objekte mit der Beschleunigungseinrichtung gegen ein Fahrzeug schleudern oder auch gleichartige Objekte mit unterschiedlichen Geschwindigkeiten gegen das Fahrzeug befördern.

Eine vorteilhafte Weiterbildung der erfindungsgemäßen Vorrichtung ergibt sich, wenn bei der Beschleunigungseinrichtung eine Richtung der Beschleunigung des wenigstens einen Objekts einstellbar ist, wobei die Beschleunigungseinrichtung dazu bevorzugt eine verschwenkbare Plattform, insbesondere eine kugelgelagerte Plattform, aufweist. Dadurch kann die Vorrichtung in vorteilhafter Weise für unterschiedliche Tests eingerichtet werden. Eine verschwenkbare Plattform, insbesondere eine kugelgelagerte Plattform, ermöglicht dabei das Bereitstellen einer besonders preiswerten Variante einer Beschleunigungseinrichtung, bei dem die Richtung der Beschleunigung einstellbar ist.

In dem Fall, dass bei der Beschleunigungseinrichtung ein Betrag der Beschleunigung oder deren Richtung einstellbar ist, ergibt sich für die erfindungsgemäße Vorrichtung eine vorteilhafte Weiterbildung, wenn ein Zeitpunkt des Beginns des Beschleunigens und/oder ein Verlauf der Beschleunigung und/oder ein Betrag der Beschleunigung und/oder eine Richtung der Beschleunigung von der Steuereinrichtung einstellbar sind. Mit anderen Worten ist durch die Steuereinrichtung in Abhängigkeit von der erfassten Position und/oder den Bewegungsparametern des Fahrzeugs ein für den Test optimaler Abschuss des Objekts dadurch erreichbar, dass die Steuereinrichtung auch die eben aufgezählten Parameter für einen Abschuss des Objekts einstellen kann. Dadurch ergibt sich der Vorteil, dass mittels der Vorrichtung auch Tests durchgeführt werden können, bei denen sehr komplexe Bewegungsabläufe des Objekts oder des Fahrzeugs vorausgesetzt werden.

Die erfindungsgemäße Vorrichtung wird des Weiteren in vorteilhafter Weise durch einen Windschutz weitergebildet, mittels welchem eine vorbestimmte Bewegungsbahn des wenigstens einen Objekts zu wenigstens einer Seite hin gegen einen Wind aus einem Umfeld der Vorrichtung abschirmbar ist. Dadurch ergibt sich der Vorteil, dass bei einem Test die Bewegung von Objekten auch dann reproduzierbar ist, wenn auf dem Versuchsfeld ein Wind weht.

Die Erfindung wird im Folgenden anhand von Beispielen näher erläutert. Dazu zeigen:
- Fig. 1: eine schematische Darstellung eines Versuchsfelds, auf dem sich ein zu testendes Fahrzeug und eine Testanlage gemäß einer Ausführungsform der erfindungsgemäßen Vorrichtung befinden, wobei durch die Testanlage eine Ausführungsform des erfindungsgemäßen Verfahrens ausgeführt wird;
- Fig. 2: eine schematische Darstellung des Versuchsfelds aus Fig. 1, wobei die Testanlage für einen anderen Test eingerichtet ist;
- Fig. 3: eine schematische Darstellung einer Abschussplattform, die Bestandteil einer Testanlage gemäß einer Ausführungsform der erfindungsgemäßen Vorrichtung ist; und
- Fig. 4: eine schematische Darstellung einer weiteren Abschussplattform, die ebenfalls Bestandteil einer Testanlage gemäß einer Ausführungsform der erfindungsgemäßen Vorrichtung ist.

Die Beispiele stellen bevorzugte Ausführungsformen der Erfindung dar.

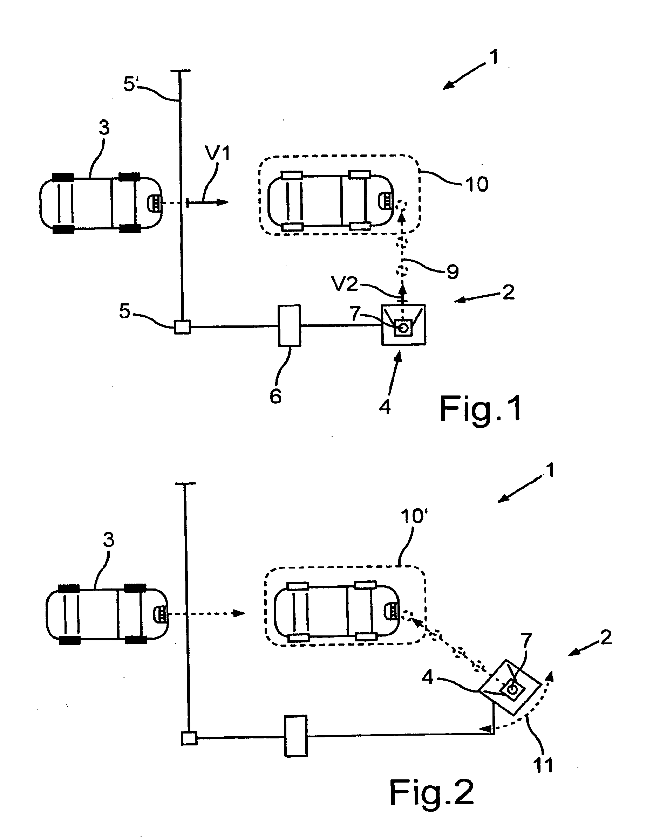

In Fig. 1 ist ein Versuchsfeld 1 dargestellt, auf dem eine Testanlage 2 aufgebaut ist. Mittels der Testanlage wird ein umfeldsensorbasiertes System eines Fahrzeugs 3 getestet. Das umfeldbasierte System kann ein Fahrerassistenzsystem oder ein Sicherheitssystem sein, welches mit Sensoren das Fahrzeugumfeld überwacht und darin befindliche Objekte erfasst. Die Sensoren sollen bestimmte Objekte erkennen (z. B. Fahrzeuge, Motorradfahrer, Fußgänger, Bäume usw.) und gegebenenfalls Aktionen einleiten, beispielsweise im Falle eines Sicherheitssystems einen irreversiblen Aktuator auslösen, also z.B. ein Airbag zünden, oder automatisch Bremsen.

Diese Aktionen sollen aber in bestimmten Situationen nicht ausgelöst werden. Ein Beispiel für eine Situation, in der es zu einer Falschauslösung kommen kann, sind Kollisionen mit über die Straße rollenden Bällen oder anderen Gegenständen (Pappkartons usw.). In diesen Situationen sollen z. B. Airbags nicht ausgelöst werden. Das bedeutet, die Sensoren müssen solche Situationen richtig erkennen und bewerten. Dies wird auf dem Versuchsfeld 1 mittels der Testanlage 2 getestet, die dazu reproduzierbare Testbedingungen erzeugen kann.

Mit der Testanlage 2 ist es möglich, reproduzierbar diverse Gegenstände wie z. B. Bälle, Schaumstoffobjekte, Pappkartons usw. vor das Fahrzeug 3 zu schießen um die Reaktionen von in Fig. 1 nicht dargestellten Sensoren des Fahrzeugs 3 in diesen Situationen zu untersuchen. Die Testanlage besteht aus einer Abschussplattform 4, einem Geschwindigkeitsmesssystem 5 und einer Steuerung 6. Mittels einer Lichtschranke 5' wird durch das Geschwindigkeitsmesssystem 5 die Fahrzeuggeschwindigkeit V1 des Fahrzeugs 3 ermittelt, wenn es die Lichtschranke 5' passiert. Das Geschwindigkeitsmesssystem 5 überträgt ein Geschwindigkeitssignal an die Steuerung 6, welche ihrerseits daraufhin die Abschussanlage 4 entsprechend ansteuert. Dabei besitzt die Steuerung Einstellmöglichkeiten für eine Abschussgeschwindigkeit V2, mit der ein Ball 7 von der Abschussplattform 4 abgeschossen werden kann. Die Steuerung 6 ist auch in der Lage, für das Bestimmen eines geeigneten Abschusszeitpunkts eine Flugparabel 9 zu berechnen, welche eine Flugbahn des Balles 7 nach dessen Abschuss durch die Abschussplattform 4 beschreibt.

Die Abschussplattform 4 schießt den Ball 7 so mit der eingestellten Abschussgeschwindigkeit V2 vor das Fahrzeug 3, dass es zu einer Kollision des Balles 7 mit dem Fahrzeug 3 kommt. Die Steuerung 6 löst die Abschussplattform 4 dabei in Abhängigkeit von der Fahrzeuggeschwindigkeit V1 genau zu einem solchen Zeitpunkt aus, dass es definiert zur Kollision kommt.

Mittels einer Auswertesoftware kann dann das Verhalten des zu untersuchenden Systems in dem Fahrzeug 3 (Sensor und Fahrzeugfunktion, z. B. Sicherheitsfunktion) bewertet werden. In dem in Fig. 1 gezeigten Beispiel werden Sensoren des Fahrzeugs 3 daraufhin bewertet, ob diese unterschiedliche Testgegenstände, also z.B. den Ball 7, überhaupt detektieren und gegebenenfalls richtig klassifizieren. Die Sensoren sollen dabei zwischen solchen Objekten unterscheiden, die überfahrbar sind, sodass keine-Sicherheitsfunktion ausgelöst werden muss, und solchen Objekten, bei denen im Falle einer Kollision die Sicherheit des Fahrers gefährdet ist und deshalb die Sicherheitsfunktion ausgelöst werden muss. Durch den Test können Rückschlüsse auf z.B. Robustheit gegenüber Falschauslösungen auf die mittels von Sensorsignalen gesteuerten Funktionen getroffen werden. Die Testanlage 2 kann als ein Bestandteil einer Funktionsabsicherung gegenüber Falschauslösung eingesetzt werden.

In Fig. 1 ist gezeigt, wie das Fahrzeug 3 nach dem Passieren der Lichtschranke 5' zu einem späteren Zeitpunkt eine Position erreicht hat, an der es mit dem Ball 7 kollidiert. Diese Kollisionssituation 10 kann in derselben Weise durch die Testanlage 2 beliebig oft reproduziert werden.

Eventuelle Wettereinflüsse, vor allem Wind, können bei der Testanlage 2 durch einen in Fig. 1 nicht dargestellten speziellen Windschutz rund um die Testanlage abgeschirmt werden. Der Windschutz kann auch in Form eines Tunnels gestaltet sein, durch den der Ball 7 auf seiner Flugbahn entlag der Flugparabel 9 geschossen wird. Es kann auch vorgesehen sein, die Testanlage derart auszulegen, dass die Tests ein einer Halle durchführbar sind.

In Fig. 2 ist das Versuchsfeld 1 mit der Testanlage 2 und dem Fahrzeug 3 noch einmal dargestellt. In Fig. 2 sind daher für Elemente, die Elementen in Fig. 1 entsprechen, auch dieselben Bezugszeichen wie in Fig. 1 vergeben.

In Fig. 2 ist die Testanlage 2 so eingerichtet, dass eine andere Kollisionssituation 10' herbeigeführt wird, als bei dem Test, wie er in Fig. 1 dargestellt ist. bei der Kollisionssituation 10' der Fig. 2 wird der Ball 7 dazu zu einem Zeitpunkt und in eine Richtung von Abschussplattform 4 abgeschossen, dass der Ball 7 schräg von vorn auf das Fahrzeug 3 trifft. Die Abschussplattform ist dazu verschwenkt worden. Weitere, mit der Abschussplattform 4 einstellbare möglichen Schwenkrichtungen sind in Fig. 2 durch einen Pfeil 11 angedeutet.

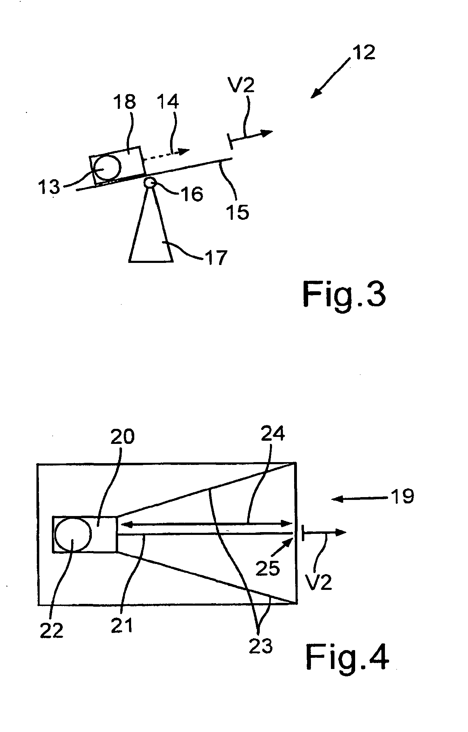

In Fig. 3 ist ein Katapult 12 dargestellt, mit dem ein Prüfkörpers 13 in eine Abschussrichtung 14 beschleunigt werden kann. Das Katapult 12 dient in einer in Fig. 3 nicht weiter dargestellten Testanlage als Abschussplattform ähnlich wie die Abschussplattform 4 in der in den Figuren 1 und 2 dargestellten Testanlage 2. Das Katapult 12 kann über ein Steuersignal von einem in Fig. 3 nicht gezeigten Steuergerät ausgelöst werden.

Das Katapult besteht aus einer Plattform 15, mit der die Abschussrichtung 14 in horizontaler und vertikaler Richtung eingestellt werden kann. Die Plattform 15 ist zu diesem Zweck mittels eines Kugellagers 16 auf einem Ständer 17 gelagert. Der Ständer 17 ist außerdem höhenverstellbar. Durch die Verstellmöglichkeiten mittels des Kugellagers 16 und des höhenverstellbaren Ständers 17 kann die Auftreffstelle an einem Fahrzeug variiert werden.

An der Plattform 15 ist ein Behälter 18 für den Prüfkörper 13 beweglich gelagert angebracht. Es kann auch vorgesehen sein, unterschiedliche Behälter bzw. Aufnahmeeinrichtungen per Adapter an der Plattform 15 anzubringen, um die Einsatzmöglichkeiten des Katapultes 12 zu erweitern. Damit ist es beispielsweise möglich, unterschiedliche Prüfkörper als Testobjekte für eine Kollisionssituation zu verwenden.

Der Behälter 18 mit dem darin befindlichen Prüfkörper 13 kann zum Abschießen des Prüfkörpers 13 auf unterschiedliche Weise beschleunigt werden. Beispiele für einen Abschussmechanismus sind eine pyrotechnische Vorrichtung, eine Beschleunigung über Druckluft, über Federn oder über Elastomerseile. Es kann auch vorgesehen sein, den Behälter mit einer beweglich gelagerten Zahnstange zu verbinden, die Teil eines elektrisch betriebenen Zahnstangenantriebs ist, oder den Behälter mit einem Elektromotor zu verbinden, der sich über ein Zahnrad entlang einer fest mit der Plattform 15 verbundenen Zahnstange bewegen kann.

Wenn das Katapult 12 ausgelöst wird, wird der Behälter 18 mit dem darin befindlichen Prüfkörper 13 beschleunigt und der Behälter 18 dabei in die Abschussrichtung 14 auf das in Fig. 3 obere Ende der Plattform 15 hin bewegt. Sobald der Behälter 18 das Ende der Plattform 15 erreicht, verlässt der Prüfkörper 13 den Behälter 18 mit einer vorbestimmten Abschussgeschwindigkeit V2. Je nach Justage der Plattform 15 trifft der Prüfkörper 13 dann an einer vorbestimmten Position an einem zu testenden Fahrzeug auf. Je nach Typ des Abschussmechanismus' kann die Abschussgeschwindigkeit V2 des Prüfkörpers 13 über eine einstellbare Spannung einer Feder oder eines E-lastomerseiles bzw. durch Variieren eines Druckes oder einer Sprengladung variiert werden.

In Fig. 4 ist eine Draufsicht auf eine Abschussplattform 19 gezeigt, die Bestandteil eines in Fig. 4 nicht weiter dargestellten Katapults ist. Auf der Plattform 19 ist ein Behälter 20 auf einer Schiene 21 gelagert. In dem Behälter 20 befindet sich ein Prüfkörper 22, der mittels des Katapults vor ein in Fig. 4 nicht dargestelltes Fahrzeug geschossen werden soll. Der Behälter 20 ist dazu an das in Fig. 4 linke Ende der Schiene 21 bewegt worden, wodurch Elastomerseile 23 gespannt worden sind. Der Behälter 20 wird durch einen in Fig. 4 nicht gezeigten Mechanismus in seiner Position am linken Ende der Schiene 21 gehalten.

Über ein Steuersignal, dass an das Katapult gesendet wird, kann der Mechanismus zum Abschießen des Prüfkörpers 22 entklinkt und der Behälter 20 dadurch freigegeben werden. Hierdurch wird der Behälter 20 durch die gespannten Elastomerseile 23 entlang der Schiene 21 über eine Beschleunigungsstrecke 24 an das in Fig. 4 rechte Ende der Schiene 21 beschleunigt. Am Ende der Beschleunigungsstrecke 24 wird die Bewegung des Behälters 20 durch einen Anschlag 25 gestoppt. Der Prüfkörper 22 tritt dabei mit einer vorbestimmten Abschussgeschwindigkeit V2 aus dem Behälter 20 aus, d.h. er verlässt damit auch die Abschussplattform 19 mit der vorbestimmten Abschussgeschwindigkeit V2.

Durch die Beispiele ist gezeigt, wie eine Möglichkeit zum Testen von Umweltsensoren gegenüber Falschauslösung mit bestimmten Prüfkörpern durch die Erfindung ermöglicht ist. Die Prüfkörper weisen dabei eine vorgebbare und reproduzierbare Objektgeschwindigkeit und Bewegungsrichtung auf, so dass ein Aufprallort an einem fahrenden Fahrzeug sehr genau festgelegt werden kann. Indem Testobjekte in reproduzierbarer Weise in Kollision mit einem Testfahrzeug bringbar sind, kann mittels der Erfindung einer Überprüfung einer Sensorik und anderer Funktionen des Testfahrzeugs durchgeführt werden. Dadurch ist eine Auswertung der Reaktion der Systeme möglich.

## Patentansprüche

1. Verfahren zum Überprüfen einer Funktion eines Fahrzeugs (3), wobei das Fahrzeug (3) eine Überwachungseinrichtung zum Erkennen einer möglichen Kollision des Fahrzeugs (3) mit mindestens einem Objekt in einer Umgebung des Fahrzeugs (3) aufweist, wobei
die Funktion des Fahrzeugs (3) das Auslösen einer Änderung eines Zustands wenigstens einer Komponente des Fahrzeugs (3) in Folge eines Erkennens einer möglichen Kollision durch die Überwachungseinrichtung umfasst, und wobei
bei dem Verfahren das Fahrzeug (3) in ein Versuchsfeld (1) gebracht wird und außerhalb des Fahrzeugs (3) mindestens ein Objekt (7,13,22) auf dem Versuchsfeld in Bewegung gesetzt wird, so dass das mindestens eine Objekt (7,13,22) in die von der Überwachungseinrichtung überwachte Umgebung des Fahrzeugs (3) gelangt, wobei
das mindestens eine Objekt (7,13,22) mit einer Beschleunigungseinrichtung (4,12) in einem Abstand zum Fahrzeug (3) beschleunigt und dann freigegeben wird, so dass das mindestens eine Objekt aufgrund seiner Trägheit eigenständig in die überwachte Umgebung gelangt, **dadurch gekennzeichnet, dass** durch die Überwachungseinrichtung das wenigstens eine Objekt und/oder eine Art der Kollision klassifizierbar ist und die Zustandsänderung zusätzlich in Abhängigkeit von dem Ergebnis der Klassifizierung auslösbar ist, und dass
bei dem Verfahren
a) für den Fall, dass durch die Überwachungseinrichtung das wenigstens eine Objekt klassifizierbar ist, wenigstens ein Objekt beschleunigt wird, für das durch die Überwachungseinrichtung ein Auslösen der Zustandsänderung nicht vorgesehen ist, und/oder
b) für den Fall, dass durch die Überwachungseinrichtung eine Art der Kollision klassifizierbar ist, das wenigstens eine Objekt derart beschleunigt wird,
dass sich eine Art der Kollision ergibt, für die durch die Überwachungseinrichtung ein Auslösen der Zustandsänderung nicht vorgesehen ist.

2. Verfahren nach Anspruch 1,
**dadurch gekennzeichnet, dass**
eine Position und/oder eine Geschwindigkeit (V1) und/oder eine Beschleunigung des Fahrzeugs (3) erfasst wird und das Objekt (7,13,22) in Abhängigkeit von der erfassten Position und/oder der erfassten Geschwindigkeit (V1) und/oder der erfassten Beschleunigung beschleunigt wird, so dass es zu einem vorbestimmten zukünftigen Zeitpunkt mit einer vorbestimmten Geschwindigkeit und/oder Bewegungsrichtung in die von der überwachungseinrichtung überwachte Umgebung gelangt.

3. Verfahren nach einem der vorhergehenden Ansprüche,
**dadurch gekennzeichnet, dass**
die Beschleunigungseinrichtung das wenigstens eine Objekt durch Schleudern oder Schießen oder Abwerfen beschleunigt.

4. Vorrichtung zum Überprüfen einer Funktion eines Fahrzeugs, mit
- einer im Fahrzeug (3) angeordneten Überwachungseinrichtung zum Erkennen einer möglichen Kollision des Fahrzeugs (3) mit mindestens einem Objekt in einer Umgebung des Fahrzeugs (3),
- wobei die Funktion des Fahrzeugs (3) ausgelegt ist, in Folge eines Erkennens einer möglichen Kollision durch die Überwachungseinrichtung eine Änderung eines Zustands wenigstens einer Komponente des Fahrzeugs (3) auszulösen, und
- eine Beschleunigungseinrichtung (4, 12), wobei
die Beschleunigungseinrichtung (4,12) ausgelegt ist, das mindestens eine Objekt (7, 13, 22) in einem Abstand zum Fahrzeug (3) zu beschleunigen und dann freizugeben, so dass das mindestens eine Objekt aufgrund seiner Trägheit eingeständig in die überwachte Umgebung gelangt,
**dadurch gekennzeichnet, dass** die Überwachungseinrichtung dazu ausgelegt ist, das wenigstens eine Objekt und/oder eine Art der Kollision zu klassifizieren und die Überwachungseinrichtung dazu ausgelegt ist, die Zustandsänderung zusätzlich in Abhängigkeit von dem Ergebnis der Klassifizierung auszulösen.

5. Vorrichtung nach Anspruch 4,
**dadurch gekennzeichnet,**
**dass** die Vorrichtung weiterhin eine Steuereinrichtung (6) umfasst, die ausgelegt ist, ein Signal mit einer Information über eine Position und/oder eine Geschwindigkeit (V1) und/oder eine Beschleunigung des Fahrzeugs zu empfangen und in Abhängigkeit von der Information das Auslösen der Beschleunigungseinrichtung (4,12) zu bewirken.

6. Vorrichtung nach einem der Ansprüche 4 oder 5,
**gekennzeichnet durch**
eine Erfassungseinrichtung (5), die dazu ausgelegt ist, die Position und/oder die Geschwindigkeit (V1) und/oder die Beschleunigung des Fahrzeugs (3) zu erfassen und das Signal mit der Information an die Steuereinrichtung (6) zu übertragen, wobei die Erfassungseinrichtung (5) bevorzugt eine Lichtschranke (5') umfasst.

7. Vorrichtung nach einem der Ansprüche 4 bis 6,
**dadurch gekennzeichnet, dass**
die Beschleunigungseinrichtung (4,12) eine Aufnahmevorrichtung (18,20) zum Aufnehmen des wenigstens einen Objekts (7,13,22) aufweist.

8. Vorrichtung nach einem der Ansprüche 4 bis 7,
**dadurch gekennzeichnet, dass**
die Beschleunigungseinrichtung eine Schiene (21) aufweist, mittels welcher das wenigstens eine Objekt (22) in seiner Bewegung führbar ist, während es beschleunigt wird.

9. Vorrichtung nach einem der Ansprüche 4 bis 8,
**dadurch gekennzeichnet, dass**
die Beschleunigungseinrichtung zum Beschleunigen des wenigstens einen Objekts wenigstens eine Feder und/oder wenigstens ein Seil (23) aus einem Elastomer aufweist.

10. Vorrichtung nach einem der Ansprüche 4 bis 9,
**dadurch gekennzeichnet, dass**
die Beschleunigungseinrichtung zum Beschleunigen des wenigstens einen Objekts eine pyrotechnische oder pneumatische oder hydraulische Einrichtung oder einen Elektromotor aufweist.

11. Vorrichtung nach einem der Ansprüche 4 bis 10,
**dadurch gekennzeichnet, dass**
bei der Beschleunigungseinrichtung ein Betrag der Beschleunigung des wenigstens einen Objekts einstellbar ist.

12. Vorrichtung nach einem der Ansprüche 4 bis 11,
**dadurch gekennzeichnet, dass**
bei der Beschleunigungseinrichtung eine Richtung (11) der Beschleunigung des wenigstens einen Objekts einstellbar ist, wobei die Beschleunigungseinrichtung dazu bevorzugt eine verschwenkbare Plattform, insbesondere eine kugelgelagerte Plattform (15, 19), aufweist.

13. Vorrichtung nach Anspruch 11 oder 12,
**dadurch gekennzeichnet, dass**
ein Zeitpunkt eines Beginns des Beschleunigens und/oder ein Verlauf der Beschleunigung und/oder ein Betrag der Beschleunigung und/oder eine Richtung der Beschleunigung von der Steuereinrichtung einstellbar sind.

14. Vorrichtung nach einem der Ansprüche 4 bis 13,
**gekennzeichnet durch**
einen Windschutz, mittels welchem eine vorbestimmte Bewegungsbahn des wenigstens einen Objekts zu wenigstens einer Seite hin gegen einen Wind aus einem Umfeld der Vorrichtung abschirmbar ist.

## Claims

1. Method for checking a function of a vehicle (3), the vehicle (3) comprising a monitoring apparatus for detecting a possible collision of the vehicle (3) with at least one object in the vicinity of the vehicle (3), the function of the vehicle (3) involving triggering a change in state of at least one component of the vehicle (3) following detection by the monitoring apparatus of a possible collision, and, in the method, the vehicle (3) being brought into a test field (1) and, outside the vehicle (3), at least one object (7, 13, 22) being moved on the test field so that the at least one object (7, 13, 22) enters the vicinity of the vehicle (3) monitored by the monitoring apparatus, the at least one object (7, 13, 22) being accelerated using an acceleration apparatus (4, 12) at a distance from the vehicle (3) and then being released, so that the at least one object autonomously enters the monitored area by inertia, **characterised in that** the at least one object and/or type of collision is classifiable by the monitoring apparatus and the change in state can additionally be triggered on the basis of the result of the classification, and **in that**, in the method:
a) if the at least one object can be classified by the monitoring apparatus, at least one object is accelerated, for which object triggering of the change in state is not provided by the monitoring apparatus, and/or
b) if a collision type can be classified by the monitoring apparatus, the at least one object is accelerated so as to produce a collision type for which triggering of the change in state is not provided by the monitoring apparatus.

2. Method according to claim 1, **characterised in that** a position and/or a speed (V1) and/or an acceleration of the vehicle (3) is detected and the object (7, 13, 22) is accelerated on the basis of the detected position and/or detected speed (V1) and/or detected acceleration, so as to enter the area monitored by the monitoring apparatus, at a predetermined future time at a predetermined speed and/or in a predetermined direction of movement.

3. Method according to any of the preceding claims, **characterised in that** the acceleration apparatus accelerates the at least one object by skidding or shooting or dropping.

4. Device for checking a function of a vehicle, comprising
- a monitoring apparatus arranged in the vehicle (3) for detecting a possible collision of the vehicle (3) with at least one object in the vicinity of the vehicle (3),
- the function of the vehicle (3) being designed to trigger a change in state of at least one component of the vehicle (3) following detection by the monitoring apparatus of a possible collision, and
- an acceleration apparatus (4, 12),
- the acceleration apparatus (4, 12) being designed to accelerate and then release the at least one object (7, 13, 22) at a distance from the vehicle (3) so that the at least one object enters the monitored area by inertia, **characterised in that** the monitoring apparatus is designed to classify the at least one object and/or collision type, and the monitoring apparatus is designed to trigger the change in state on the additional basis of the classification result.

5. Device according to claim 4, **characterised in that** the device further comprises a controller (6) designed to receive a signal containing information on a position and/or a speed (V1) and/or an acceleration of the vehicle and, depending on that information, to trigger the acceleration apparatus (4, 12).

6. Device according to either claim 4 or claim 5, **characterised by** a detector (5) designed to detect the position and/or speed (V1) and/or acceleration of the vehicle (3) and to transfer the information-containing signal to the controller (6), the detector (5) preferably comprising a light barrier (5').

7. Device according to any of claims 4 to 6, **characterised in that** the acceleration device (4, 12) has a receptacle (18, 20) for receiving the at least one object (7, 13, 22).

8. Device according to any of claims 4 to 7, **characterised in that** the acceleration device has a rail (21) which can be used to guide the movement of the at least one object (22) as it is accelerated.

9. Device according to any of claims 4 to 8, **characterised in that** the acceleration apparatus has a spring and/or at least one elastomer cable (23) for accelerating the at least one object.

10. Device according to any of claims 4 to 9, **characterised in that** the acceleration apparatus has a pyrotechnic, pneumatic or hydraulic apparatus or an electric motor for accelerating the at least one object.

11. Device according to any of claims 4 to 10, **characterised in that** a value of the acceleration of the at least one object can be set in the acceleration apparatus.

12. Device according to any of claims 4 to 11, **characterised in that** a direction (11) of the acceleration of the at least one object can be set in the acceleration apparatus, for this purpose the acceleration apparatus preferably having a pivotable platform, in particular a ball-bearing platform. (15, 19).

13. Device according to either claim 11 or claim 12, **characterised in that** a point in time at which acceleration begins and/or a course of acceleration and/or a value of acceleration and/or direction of acceleration can be set by the controller.

14. Device according to any of claims 4 to 13, **characterised by** a wind protector by means of which a predetermined movement path of the at least one object can be shielded on at least one side against the wind from an area surrounding the device.

## Revendications

1. Procédé de vérification d'une fonction d'un véhicule (3), dans lequel le véhicule (3) présente un dispositif de surveillance pour identifier une collision éventuelle du véhicule (3) avec au moins un objet dans un environnement du véhicule (3), dans lequel :
la fonction du véhicule (3) comprend le déclenchement d'une modification d'un état au moins d'un composant du véhicule (3) à la suite d'une identification d'une collision éventuelle par le dispositif de surveillance et dans lequel :
au cours du procédé, le véhicule (3) est amené sur un terrain d'essai (1) et, en dehors du véhicule (3), au moins un objet (7, 13, 22) est placé en mouvement sur le terrain d'essai de sorte qu'au moins un objet (7, 13, 22) parvienne dans l'environnement du véhicule (3) surveillé par le dispositif de surveillance, dans lequel :
le au moins un objet (7, 13, 22) est accéléré par un dispositif d'accélération (4, 12) à une certaine distance du véhicule (3) et ensuite libéré de sorte que le au moins un objet parvienne de par son inertie de manière autonome dans l'environnement surveillé,
**caractérisé en ce que** :
le au moins un objet et/ou un type de collision peut ou peuvent être classifiés par le dispositif de surveillance et la modification d'état peut en plus être déclenchée en fonction du résultat de la classification, et **en ce que** :
au cours du Procédé :
a) dans le cas où le au moins un objet peut être classifié par le dispositif de surveillance, au moins un objet est accéléré pour lequel un déclenchement de la modification d'état n'est pas prévu par le dispositif de surveillance, et/ou
b) dans le cas où un type de collision peut être classifié par le dispositif de surveillance, le au moins un objet est accéléré de sorte qu'il se produise un type de collision pour lequel un déclenchement de la modification d'état n'est pas prévu par le dispositif de surveillance.

2. Procédé selon la revendication 1,
**caractérisé en ce que** :
l'on saisit une position et/ou une vitesse (V1) et/ou une accélération du véhicule (3) et l'objet (7, 13, 22) est accéléré en fonction de la position saisie et/ou de la vitesse saisie (V1) et/ou de l'accélération saisie de sorte qu'il parvienne à un moment futur prédéterminé et avec une vitesse prédéterminée et/ou une direction de déplacement dans l'environnement surveillé par le dispositif de surveillance.

3. Procédé selon l'une quelconque des revendications précédentes,
**caractérisé en ce que** :
le dispositif d'accélération accélère le au moins un objet par centrifugation ou projection ou éjection.

4. Dispositif pour vérifier une fonction d'un véhicule, comprenant :
- un dispositif de surveillance aménagé dans le véhicule (3) pour identifier une collision éventuelle du véhicule (3) avec au moins un objet dans un environnement du véhicule (3),
- dans lequel la fonction du véhicule (3) est conçue pour déclencher, à la suite d'une identification d'une collision éventuelle par le dispositif de surveillance, une modification d'un état d'au moins un composant du véhicule (3) et
- un dispositif d'accélération (4, 12), dans lequel :
le dispositif d'accélération (4, 12) est conçu pour accélérer au moins un objet (7, 13, 22) à une distance du véhicule (3) et le libérer ensuite de sorte que le au moins un objet parvienne de manière autonome de par son inertie dans l'environnement surveillé,
**caractérisé en ce que** :
le dispositif de surveillance est conçu pour classifier le au moins un objet et/ou un type de collision et le dispositif de surveillance est conçu pour déclencher la modification d'état en plus en fonction du résultat de la classification.

5. Dispositif selon la revendication 4,
**caractérisé en ce que** :
le dispositif comprend en outre un dispositif de commande (6) qui est conçu pour recevoir un signal avec une information sur une position et/ou une vitesse (V1) et/ou une accélération du véhicule et induire en fonction de l'information le déclenchement du dispositif d'accélération (4, 12).

6. Dispositif selon l'une quelconque des revendications 4 ou 5,
**caractérisé par** :
un dispositif de saisie (5) qui est conçu pour saisir la position et/ou la vitesse (V1) et/ou l'accélération du véhicule (3) et transférer le signal avec l'information au dispositif de commande (6), dans lequel le dispositif de saisie (5) comprend de préférence une barrière lumineuse (5').

7. Dispositif selon l'une quelconque des revendications 4 à 6,
**caractérisé en ce que** :
le dispositif d'accélération (4, 12) présente un dispositif de réception (18, 20) pour recevoir le au moins un objet (7, 13, 22).

8. Dispositif selon l'une quelconque des revendications 4 à 7,
**caractérisé en ce que** :
le dispositif d'accélération présente un rail (21) à l'aide duquel le au moins un objet (22) peut être guidé dans son déplacement, tandis qu'il est accéléré.

9. Dispositif selon l'une quelconque des revendications 4 à 8,
**caractérisé en ce que** :
le dispositif d'accélération destiné à accélérer le au moins un objet présente au moins un ressort et/ou au moins un câble formé d'un élastomère (23).

10. Dispositif selon l'une quelconque des revendications 4 à 9,
**caractérisé en ce que** :
le dispositif d'accélération destiné à accélérer le au moins un objet présente un dispositif pyrotechnique ou pneumatique ou hydraulique ou un moteur électrique.

11. Dispositif selon l'une quelconque des revendications 4 à 10,
**caractérisé en ce que** :
dans le dispositif d'accélération, un niveau de l'accélération du au moins un objet est réglable.

12. Dispositif selon l'une quelconque des revendications 4 à 11,
**caractérisé en ce que** :
dans le dispositif d'accélération, une direction (11) de l'accélération du au moins un objet est réglable, dans lequel le dispositif d'accélération présente à cet effet de préférence une plateforme pivotante, en particulier une plateforme à roulements à billes (15, 19).

13. Dispositif selon la revendication 11 ou la revendication 12,
**caractérisé en ce que** :
un moment d'un début de l'accélération et/ou un parcours de l'accélération et/ou un niveau de l'accélération et/ou une direction de l'accélération est ou sont réglables par le dispositif de commande.

14. Dispositif selon l'une quelconque des revendications 4 à 13,
**caractérisé par** :
un paravent, au moyen duquel une voie de déplacement prédéterminée du au moins un objet vers au moins un côté peut être protégé d'un vent venant d'un environnement du dispositif.
